# EUROPEAN PATENT SPECIFICATION

(11) **EP 4 354 798 B1**
(45) Date of publication and mention of the grant of the patent: **16.09.2026**
(21) Application number: 23202310.1
(22) Date of filing: 09.10.2023
(51) Int. Cl.: H04L 9/40, H04W 12/069

(54) **ENHANCED SECURITY IN COMMUNICATION NETWORKS**
ERHÖHTE SICHERHEIT IN KOMMUNIKATIONSNETZEN
SÉCURITÉ AMÉLIORÉE DANS DES RÉSEAUX DE COMMUNICATION

(30) Priority: 10.10.2022 IN 202241057873
(43) Date of publication of application: 17.04.2024
(73) Proprietor: Nokia Technologies Oy, 02610 Espoo (FI)
(72) Inventor: PEINADO GOMEZ, German, Warsaw (PL); BRAHMAIAH, Topuri, Bangalore (IN); MAKHAM, Mallikarjunudu, Bangalore (IN); BOMMISETTY, Sireesha, Bangalore (IN); KHARE, Saurabh, Bangalore (IN)
(74) Representative: Samson & Partner Patentanwälte mbB

(56) References cited:
- EP-A1- 3 902 199
- US-A1- 2021 377 054
- US-A1- 2022 264 301

## Description

### FIELD

Various example embodiments relate in general to communication networks, such as core networks of cellular communication systems, and more specifically, to enhancing security in such networks.

### BACKGROUND

Security is very important in various communication networks. For example, in core networks of cellular communication systems, such as in 5G core networks developed by the 3rd Generation Partnership Project, 3GPP, security of Network Functions, NFs, and NF instances needs to be ensured. The 3GPP still develops 5G core networks and there is a need to provide enhanced methods, apparatuses and computer programs to ensure security in 5G core networks, and in other networks in the future as well.

The document EP 3 902 199 A1 describes an identity verification method for a network function service and an apparatus. The method includes: A second network element receives a network function (NF) service request from a first network element, where the NF service request includes a token (token), and the token includes first certificate information; the second network element verifies the first certificate information to determine whether an identity represented by the first certificate information is consistent with an identity of the first network element; and when the second network element determines that the identity represented by the first certificate information is inconsistent with the identity of the first network element, the second network element rejects the NF service request. By implementing this method, in a process in which the first network element requests a service from the second network element, identity validity of the first network element can be verified, thereby improving service security.

Further background art is known from the document US 2021/377054 A1 relating to systems and methods for managing public key infrastructure certificates for components of a network, and the document US 2022/264301 A1 relating to a technique for certificate handling in a core network domain.

### SUMMARY

According to the present invention, there is provided the subject-matter of the independent claims. Some example embodiments are defined in the dependent claims.

The scope of protection sought for various example embodiments is set out by the independent claims. The example embodiments and features, if any, described in this specification that do not fall under the scope of the independent claims are to be interpreted as examples useful for understanding various example embodiments.

According to a first aspect of the present disclosure, there is provided an apparatus, comprising one or more processors, and memory storing instructions that, when executed by the one or more processors, cause the apparatus to perform the first method. The at least one memory and the computer program code may be configured to, with the at least one processing core, cause the apparatus at least to store one or more key information elements, wherein each key information element comprises a stored key identifier and a stored key, or a certificate, receive, from a requesting network function, a request message comprising a first field and a second field, wherein the first field comprises an instance identity of the requesting network function and the second field comprises the instance identity of the requesting network function, and the first field is unprotected and the second field is protected with the key or the certificate, determine the key or the certificate used for protecting the second field, validate the second field using the key or the certificate, validate the request message when the instance identity of the requesting network function in the first field matches with the instance identity of the requesting network function in the validated second field and transmit, after a successful validation of the second field and the request message, a response to the requesting network function.

Example embodiments of the first aspect may comprise at least one feature from the following bulleted list or any combination of the following features:
- wherein the first field is a subject alt name field or a reference number field;
- wherein the second field comprises a protected message, said protected message further comprising a subject alt name field and a reference number field identifying the key or the certificate used for protecting the second field;
- wherein the determining the key used for protecting the second field further comprises causing the apparatus at least to compare the reference number field to a key identifier comprised in each of at least one of the one or more key information elements determine the key used for protecting the second field as a stored key comprised in a key information element, based on the comparison further comprising a determination that the reference number field equals a stored key identifier comprised in the key information element;
- wherein the second field comprises the certificate, the certificate being an initial certificate issued by the apparatus for the instance identity of the requesting network function;
- wherein the at least one memory and the computer program code are further configured to, with the at least one processing core, cause the apparatus at least to ignore the first field and transmit the response to the requesting network function according to the instance identity of the requesting network function in the second field;
- wherein the key is a pre-shared key between the requesting network function and an operator, and the at least one memory and the computer program code are further configured to, with the at least one processing core, cause the apparatus at least to receive the key from the operator;
- wherein the certificate is an initial certificate issued by the apparatus, and the at least one memory and the computer program code are further configured to, with the at least one processing core, cause the apparatus at least to retrieve the certificate from the memory of the apparatus after receiving the certificate request;
- wherein the validating the second field further comprises causing the apparatus at least to obtain a decrypted second field by decrypting the second field with the key and determine that the second field is valid based on determining that the first field equals the decrypted second field;
- wherein the validating the second field further comprises causing the apparatus at least to calculate a message authentication code based on at least the second field and the key and determine that the second field is valid based on determining that the first field equals the message authentication code;
- wherein the instance identity of the requesting network function is a fully qualified domain name, instance identity or any other parameter of a network function profile identifying the network function;
- wherein the request message is an enrolment request message, preferably a certificate request message, and the response is an enrolment response, preferably a certificate response;
- wherein the request message further comprises a third field comprising an expected hash value, and the validating the second field further comprises causing the apparatus at least to obtain a decrypted second field by decrypting the second field with the key, calculate a hash value based on the decrypted second field and determine that the second field is valid based on determining that the hash value equals the expected hash value;
- wherein the request message further comprises a third field comprising an expected message authentication code, and the validating the second field further comprises causing the apparatus at least to calculate a message authentication code based on at least the second field and the key and determine that the second field is valid based on determining that the message authentication code equals the expected message authentication code;
- wherein the transmitting the request message further comprises causing the apparatus at least to calculate an expected hash value based on the second field and include the expected hash value as a third field in the request message before transmitting the request message;
- wherein the transmitting the request message further comprises causing the apparatus at least to obtain an encrypted second field based on the second field and the key and replace the second field with the encrypted second field in the request message before transmitting the request message;
- wherein the transmitting the request message further comprises causing the apparatus at least to calculate an expected message authentication code based on the second field and the key and include the expected message authentication code as a third field in the request message before transmitting the request message.

According to a second aspect of the present disclosure, there is an apparatus, comprising one or more processors, and memory storing instructions that, when executed by the one or more processors, cause the apparatus to perform the second method. The at least one memory and the computer program code may be further configured to, with the at least one processing core, cause the apparatus at least to transmit a request message comprising a first field and a second field, wherein the first field comprises an instance identity of the requesting network function and the second field comprises the instance identity of the requesting network function, and the first field is unprotected and the second field is protected with a key or a certificate and receive, in response to transmitting the request message, a response when the second field is valid.
Example embodiments of the first and/or the second aspect may comprise at least one feature from the following bulleted list or any combination of the following features:
- wherein the at least one memory and the computer program code are configured to, with the at least one processing core, further cause the apparatus to operate according to at least one standard specification defined by a 3rd Generation Partnership Project, 3GPP;
- wherein the at least one standard specification is a 5G standard.

According to a third aspect of the present disclosure, a first method comprising storing, by an apparatus, one or more key information elements, wherein each key information element comprises a stored key identifier and a stored key, or a certificate, receiving by the apparatus, from a requesting network function, a request message comprising a first field and a second field, wherein the first field comprises an instance identity of the requesting network function and the second field comprises the instance identity of the requesting network function, and the first field is unprotected and the second field is protected with the key or the certificate, determining by the apparatus the key or the certificate used for protecting the second field, validating by the apparatus the second field using the key or the certificate, validating by the apparatus the request message when the instance identity of the requesting network function in the first field matches with the instance identity of the requesting network function in the validated second field and transmitting by the apparatus, after a successful validation of the second field and the request message, a response to the requesting network function.

According to a fourth aspect of the present disclosure, there is provided a second method comprising transmitting, by an apparatus a request message comprising a first field and a second field, wherein the first field comprises an instance identity of the requesting network function and the second field comprises the instance identity of the requesting network function, and the first field is unprotected and the second field is protected with a key or a certificate and receiving by the apparatus, in response to transmitting the request message, a response when the second field is valid.

According to a fifth aspect of the present disclosure, there is provided an apparatus, comprising means for performing the first method. The apparatus may comprise means for means for storing one or more key information elements, wherein each key information element comprises a stored key identifier and a stored key, or a certificate, means for receiving, from a requesting network function, a request message comprising a first field and a second field, wherein the first field comprises an instance identity of the requesting network function and the second field comprises the instance identity of the requesting network function, and the first field is unprotected and the second field is protected with the key or the certificate, means for determining the key or the certificate used for protecting the second field, means for validating the second field using the key or the certificate, means for validating the request message when the instance identity of the requesting network function in the first field matches with the instance identity of the requesting network function in the validated second field and means for transmitting, after a successful validation of the second field and the request message, a response to the requesting network function.

According to a sixth aspect of the present disclosure, there is provided an apparatus, comprising means for performing the second method. The apparatus may comprise means for transmitting, by an apparatus a request message comprising a first field and a second field, wherein the first field comprises an instance identity of the requesting network function and the second field comprises the instance identity of the requesting network function, and the first field is unprotected and the second field is protected with a key or a certificate and means for receiving by the apparatus, in response to transmitting the request message, a response when the second field is valid.

According to a seventh aspect of the present disclosure, there is provided a non-transitory computer readable medium having stored thereon a set of computer readable instructions that, when executed by at least one processor, cause an apparatus to at least perform the first or the second method. According to an eighth aspect of the present invention, there is provided a computer program comprising instructions which, when the program is executed by an apparatus, cause the apparatus to carry out the first or the second method.

### BRIEF DESCRIPTION OF THE DRAWINGS

FIGURE 1 illustrates an example of a communication system in accordance with at least some example embodiments;
FIGURE 2 illustrates a first signalling graph in accordance with at least some example embodiments;
FIGURE 3 illustrates a second signalling graph in accordance with at least some example embodiments;
FIGURE 4 illustrates an example apparatus capable of supporting at least some example embodiments;
FIGURE 5 illustrates a flow graph of a first method in accordance with at least some example embodiments.

### EXAMPLE EMBODIMENTS

Security may be enhanced by the procedures described herein for example for Network Functions, NFs, in communication networks, such as in 5G core networks or other core networks.

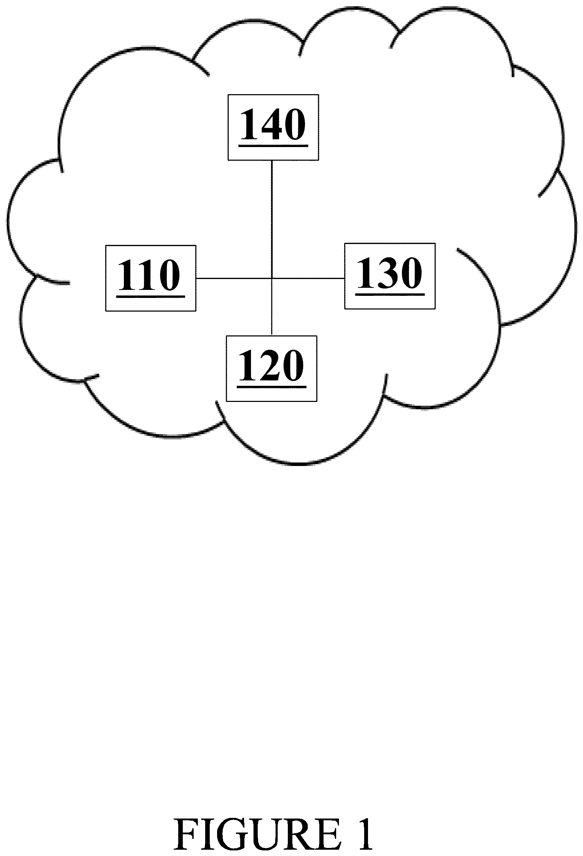

FIGURE 1 illustrates an example of a communication system in accordance with at least some embodiments. In FIGURE 1, operator 110, NF 120, Certificate Authority, CA, 130 and Network Repository Function, NRF, 140 are shown. In some example embodiments, operator 110 may be referred to as Operations Administration and Maintenance, OAM, network function. NF 120 may be an NF requesting a certificate from CA 130. Even though certificate management is used as an example in various example embodiments, example embodiments may be applied similarly to other enrolment protocols, or even to manual fetching. Thus, NF 120 may be a requesting NF in general. In some example embodiments, a Registration Authority, RA, may perform the tasks of CA 130 as described in the example embodiments.

Operator 110, NF 120 and CA 130 may be in the same network, such as in the same Public Land Mobile Network, PLMN. Operator 110, NF 120 and CA 130 may be configured to operate according to at least one cellular communication standard. More specifically, operator 110, NF 120 and CA 130 may be located in a core network of a cellular communication system, such as in a core network operating in accordance with at least one standard defined by the 3^{rd} Generation Partnership Project, 3GPP, like a 5G or a 6G standard, and configured to operate according to the at least one 3GPP standard. Operator 110, NF 120 and CA 130 may be connected to each other via at least one wired connection and/or wireless connection, and communicate with each other via said connection(s).

Operator 110, NF 120 and CA 130 may be NFs which refer to an operational and/or a physical entity. An NF may be a specific network node or element, or a specific function or set of functions carried out by one or more entities, such as Virtual Network Functions, VNFs. One physical apparatus may be configured to perform tasks of multiple NFs.

At least some example embodiments of the present disclosure may be applied in containerized deployments as well. One physical node may be configured to perform plural NFs. Examples of such network functions include a (radio) access or resource control or management function, session management or control function, interworking, data management or storage function, authentication function or a combination of one or more of these functions. In general, in accordance with embodiments of the present invention, NF 120 may also refer to a Service Communication Proxy, SCP, having a delegated role on behalf of NF 120. That is to say, the SCP may be configured to perform at least some actions of NF 110 and hence considered as NF 110.

In case of a 3^{rd} Generation Partnership Project, 3GPP, Service-Based Architecture, SBA, of 5G core networks, NF 102 may comprise at least some of an Access and Mobility Function, AMF, a Session Management Function, SMF, a Network Slice Selection Function, NSSF, a Network Exposure Function, NEF, an NRF, a Unified Data Management, UDM, an Authentication Server Function, AUSF, a Policy Control Function, PCF, an Application Function, AF, an OAM, and Network Data Analysis Function, NWDAF.

A service mesh network may refer to a network of microservices, in which applications may be shared and interaction between applications may be possible. To gain operational control over such a distributed microservice architecture, a service may need to be identified. For instance, SBA may be implemented as a service mesh architecture.

NF 120, or instances of NF 120, may offer services to other NFs or NF instances. In order for a requested NF type, NF service or NF service instance to be discovered via NRF 140, the NF instance may need to be registered in NRF 140. After registration, NRF 140 may maintain NF profiles of available NF instances and their supported services.

NF 120 may be identified by an instance Identity, ID, of NF 120, i.e., NFinstanceID of NF 120. An information element NFInstanceID may be, along with other information elements, included in the profile of NF 120 at NRF 140. The information element NFInstanceID and other IEs included in the NF profile maintained at NRF 140 may be specified for example in the 3GPP standard specification TS 23.501 (clauses 6.2.6 and 6.3.1) and in the 3GPP standard specification TS 29.510.

In some example embodiments, if NF 120 requests a X.509 certificate, it may need to send a Certificate Signing Request, CSR, message to operator 110, i.e., the operator of CA 130, in order to get a X.509 certificate created. A CSR may be generated by NF 120, i.e., the same NF on which the certificate is to be installed, although it may also be generated by other trusted intermediary entity acting on behalf of NF 120 if NF 110 does not have such capability. A public key may be included in the CSR and used by CA 130 to create the certificate. A private key may be used to sign the information contained in the CSR (integrity protection). Apart from the public key, the CSR may have other information, such as a common name, organization, location, etc.

An instance of NF 120 may be an identifiable instance, for example as defined in the 3GPP standard specification TS 23.501. CSRs may comprise a trusted and unique identity of the instance of NF 120 requesting the certificate. A part of a SBA NF certificate profile, a SubjectAltName, SAN, field may comprise a Uniform Resource Identifier, URI, - ID with the URI for the instance ID of NF 120 as an Uniform Resource Name, URN, for example as defined in the 3GPP standard specification TS 33.410 in clause 6.1.3c. The URI-ID may comprise the identifier of the instance of NF 110 (NFInstanceID), wherein NF 120 may be, e.g., SCP, SEPP, NRF, AF, etc. However, for example using the format of clause 5.3.2 of the 3GPP standard specification TS 29.571, the identifier of the instance of NF 110 (NfInstanceID) may be a Universally Unique Identifier, UUID, but nothing else.

Thus, the flexibility that a service mesh might offer by integrating different types of services across heterogeneous environments and for example in case of 5GS across different operator domains, would be limited by the use of UUID as identifier. Moreover, a RA or CA 130 of operator 110 would need to keep track on UUIDs in order to be able to verify and accept the CSRs, based on those identifiers.

The challenge therefore is that a malicious or compromised NF instance may send a rogue CSR message using a compromised NFInstanceID. Thus, the same UUID would be used by various NF instances, comprising the potential malicious or compromised NF. If operator 110 of RA or CA 130 would not have a mechanism to verify and accept a trusted NF instance identity, the malicious or compromised NF instance would be able to fetch a valid certificate and cause different types of attacks in the SBA. Embodiments of the present disclosure therefore make it possible for CA 130 to validate the CSR request coming from a genuine NF instance, like an instance of NF 120.

Nevertheless, even though certificate management, and for example a Certificate Management Protocol, CMP, is used as an example in various example embodiments, example embodiments may be applied similarly to other enrolment protocols, or even to manual fetching. That is, example embodiments are not limited to e.g., a certificate request message and may be applied for any request message, in particular for any enrolment request message, such as the certificate request message. Similarly, example embodiments are not limited to e.g., a certificate response and may be applied for any response, in particular for any enrolment response, such as the certificate response.

In some example embodiments, operator 110 may configure a pair of unique NFInstanceID and pre-shared key(secret key) for every NF and CA server. For instance, operator 110 may configure a pair of NFInstanceID of NF 120 and an associated pre-shared key for NF 120 and 130. Alternatively, NF 120 may generate an NFInstanceID and request operator 130 to configure a pre-shared key for the NFInstanceID of NF 120.

As a part of a certificate request, NF 120 may add the NFInstanceID to a first field of a certificate request message, e.g., to a SAN field. NF 120 may also add the NFInstanceID to a second field of certificate request message, like a RefNum field. NF 110 may further protect the certificate request message, like a CMP, message with the pre-shared key using, e.g., the CMPv2 protocol specified in RFC 4210.

Upon receiving the certificate request message, CA 130 may retrieve the pre-shared key corresponding to the NFInstanceID of NF 120 available in the second field, like a RefNum field, of the certificate request message. CA 130 may then validate protection of the certificate request message. In some example embodiments, CA 130 may also validate the protection by validating the NFInstanceID of NF 120 in the second field against the NFInstanceID of NF 120 in the first field. For instance, CA 130 may verify the NFInstanceID of NF 120 available in the RefNum field against the NFInstanceID of NF 120 in the SAN of certificate request message. In case of successful verification, CA 130 may issue the certificate with the NFInstanceID of NF 120 in the SAN to NF 120.

In some example embodiments, NF 120 may be configured with an initial certificate by CA 130. The initial certificate may be configured with the NFInstanceID of NF 120. For example, the NFInstanceID of NF 120 may be added to a SAN of the initial certificate. CA 130 may be configured with a root CA certificate of the initial certificate of NF 120, possibly as trust anchor.

As a part of a certificate request, NF 120 may add the NFInstanceID in the first field of the certificate request message, e.g., to a SAN field. NF 120 may add the NFInstanceID to the second field, i.e., to the initial certificate in this example. The first field may be unprotected and the second field may be protected with a private key of the initial certificate. For example, the CMP message may be protected with the private key of the initial certificate using CMPv2 protocol.

Upon receiving the certificate request message, CA 130 may validate the trust of NF 120. For instance, CA 130 may validate the protection of the certificate request message using the initial certificate. In some example embodiments, CA 130 may validate the trust using a configured trust anchor. CA 130 may also verify the NFInstanceID in the SAN of the initial certificate against the NFInstanceID in the SAN of the certificate request message. After successful verification, CA 130 may issue the certificate with the NFInstanceID in the SAN to NF 120. That is, CA 130 may transmit a certificate response to the requesting NF, i.e., to NF 120.

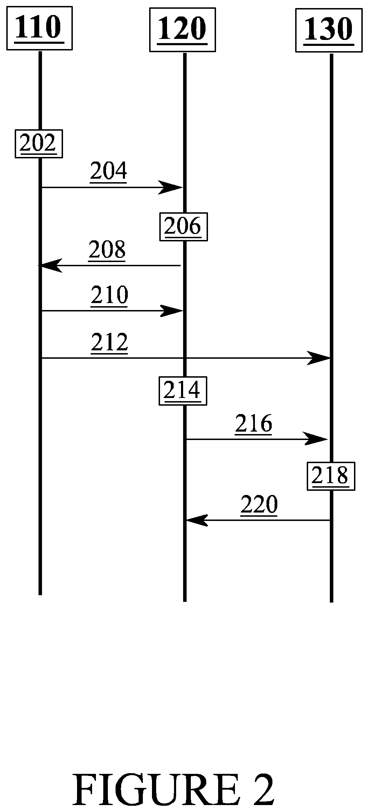

FIGURE 2 illustrates a first signalling graph in accordance with at least some example embodiments. On the vertical axes are disposed, from the left to the right, operator 110, NF 120 and CA 130. Time advances from the top towards the bottom.

At step 202, operator 110 may create a unique NFInstanceID(RefNum) along with a pre-shared key (psk) for each NF. For instance, operator 110 may create a unique NFInstanceID(RefNum) along with a pre-shared key (psk) for NF 120. Operator 110 may then, at step 204, configure NF 120 with the unique NFInstanceID(RefNum) and the pre-shared key (psk) of NF 120. Steps 202 and 204 may be performed together to configure the NFInstanceID and pre-shared key of NF 120.

Alternatively, steps 206 - 210 may be performed together to configure the NFInstanceID and pre-shared key of NF 120. NF 120 may generate its own NFInstanceID, at step 206. NF 120 may then, at step 208, request operator 110 for the pre-shared key of NF 120, i.e, for the pre-shared key of the NFInstanceID. At step 210, operator 110 may then generate the pre-shared key and configure NF 110 accordingly. In general, the pre-shared key may be a shared key between the requesting network function, i.e., NF 120, and operator 110, but transmitted to CA 130 as well.

At step 212, operator 110 may configure the pre-shared key and the NFInstanceID of NF 120 on CA 130. That is, CA 130 may receive, at step 212, the pre-shared key and the NFInstanceID of NF 120 from operator 110. CA 130 may store the pre-shared key and the NFInstanceID of NF 120 to its memory. At step 214, NF 120 may create a certificate request message by adding the NFInstanceID of NF 120 to the first field, like SAN or RefNum, and to the second field, wherein the second field may comprise SAN and RefNum. The first field may be unprotected while the second field may be protected with a key. For instance, NF 120 may use the pre-shared key for protecting the second field of the certificate request message, possibly as per RFC 4210.

At step 216, NF 120 may transmit the certificate request message to CA 130. At step 218, CA 130 may retrieve the pre-shared key from its memory, wherein the pre-shared key may be associated with the NFInstanceID of NF 120. At step 218, CA 130 may also validate the protection of the certificate request message using the pre-shared key. That is, CA 130 may regenerate the second field of the certificate request message using the pre-shared key and validate the certificate request message when the NFInstanceID of NF 120 in the first field matches with the NFInstanceID of NF 120 in the regenerated second field. For instance, CA 130 may validate the certificate request message by comparing the NFInstanceID in the SAN against the NFInstanceID in the RefNum. Therefore, a malicious, i.e., rogue, NF would not be able to generate valid message-protection by using the NFInstanceID of NF 120, without knowing the pre-shared key. After successful validation, CA 130 may generate a certificate response for NF 120, wherein the certificate response may comprise a certificate as well.

Alternatively, CA 130 may ignore the first field and use the second field in the generated certificate response. That is, CA 130 may ignore the NFInstanceID in the SAN of the certificate request message and use the NFInstanceID in the generated certificate response, i.e., transmit the certificate response to NF 120 according to the NFInstanceID of NF 120 in the second field, like the RefNum field.

At step 220, CA 130 may transmit, after successful validation at step 218, the certificate response to NF 120, i.e., to the requesting NF. The malicious, rogue NF thus cannot pretend to be a genuine NF, because it does not possess the pre-shared key, which is used at step 218 for regenerating the second field for validation. The malicious, rogue NF cannot get the certificate from CA 130 with other NFInstanceID. Furthermore, if the malicious, rogue NF would use some other NFInstanceID than the NFInstanceID of NF 120 as a RefNum, it would not know the corresponding pre-shared key as it is secret. Hence, the malicious, rogue NF would not be able to generate valid message-protection corresponding to that RefNum.

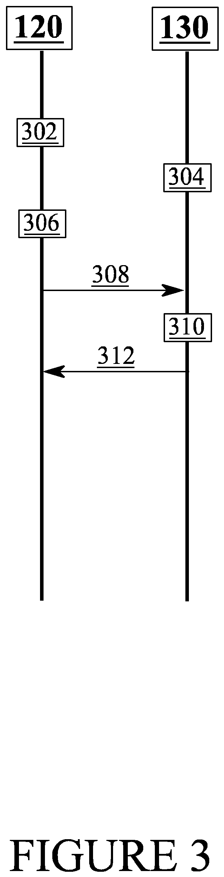

FIGURE 3 illustrates a first signalling graph in accordance with at least some example embodiments. On the vertical axes are disposed, from the left to the right, NF 120 and CA 130. Time advances from the top towards the bottom.

At step 302, NF 120 may be configured with an initial certificate. The initial certificate may be issued by CA 130 for NFInstanceID of NF 120. For instance, NF 120 may be configured with an initial certificate, wherein the initial certificate may comprise the NFInstanceID in the SAN field. At step 304, CA 130 may store the initial certificate. In some example embodiments, CA 130 may be installed with a root of the initial certificate of NF 120 as a trust anchor.

At step 306, NF 120 may generate a key for the initial certificate. For instance, NF 120 may generate public-private key pair for a certificate. At step 308, may generate a certificate request message to CA 130. NF 120 may generate the certificate request message by adding the NFInstanceID of NF 120 to the first field, like SAN or RefNum. NF 120 may further add a second field, wherein the second field may comprise the initial certificate. The initial certificate may further comprise the NFInstanceID of NF 120, as CA 130 may have generated the initial certificate for the NFInstanceID of NF 120. The first field may be unprotected while the second field may be protected with a key. The key may be the private key of the initial certificate.

At step 308, NF 120 may also transmit the certificate request message to CA 130, wherein the certificate request message comprises the first field, like the SAN, and the second field, i.e., the initial certificate.

At step 310, CA 130 may validate the protection of the certificate request message using the initial certificate, e.g., the private key of the initial certificate. That is, CA 130 may regenerate the second field of the certificate request message using the private key of the initial certificate and validate the certificate request message when the NFInstanceID of NF 120 in the first field matches with the NFInstanceID of NF 120 in the regenerated second field. For instance, CA 130 may validate the certificate request message by comparing the NFInstanceID in the SAN against the NFInstanceID in the initial certificate. Therefore, a malicious, i.e., rogue, NF would not be able to generate valid message-protection by using the NFInstanceID of NF 120, without knowing the pre-shared key. After successful validation, CA 130 may generate a certificate response for NF 120, wherein the certificate response may comprise a certificate as well.

Alternatively, CA 130 may ignore the first field and use the second field in the generated certificate response. That is, CA 130 may ignore the NFInstanceID in the SAN of the certificate request message and use the NFInstanceID for generating the EE certificate, i.e., transmit the certificate response to NF 120 according to the NFInstanceID of NF 120 in the second field. At step 312, CA 130 may transmit, after successful validation at step 310, the certificate response to NF 120, i.e., to the requesting NF.

In some example embodiments, the validating the second field may comprise causing obtaining a decrypted second field by decrypting the second field with the key and determining that the second field is valid based on determining that the first field equals the decrypted second field. Alternatively, or in addition, the validating the second field may comprise causing calculating a message authentication code based on at least the second field and the key and determining that the second field is valid based on determining that the first field equals the message authentication code.

In some example embodiments, the request message may further comprise a third field comprising an expected hash value, and the validating the second field may further comprise causing obtaining a decrypted second field by decrypting the second field with the key, calculating a hash value based on the decrypted second field and determining that the second field is valid based on determining that the hash value equals the expected hash value. Alternatively, or in addition, the request message may further comprise a third field comprising an expected message authentication code, and the validating the second field may further comprises causing calculating a message authentication code based on at least the second field and the key and determining that the second field is valid based on determining that the message authentication code equals the expected message authentication code.

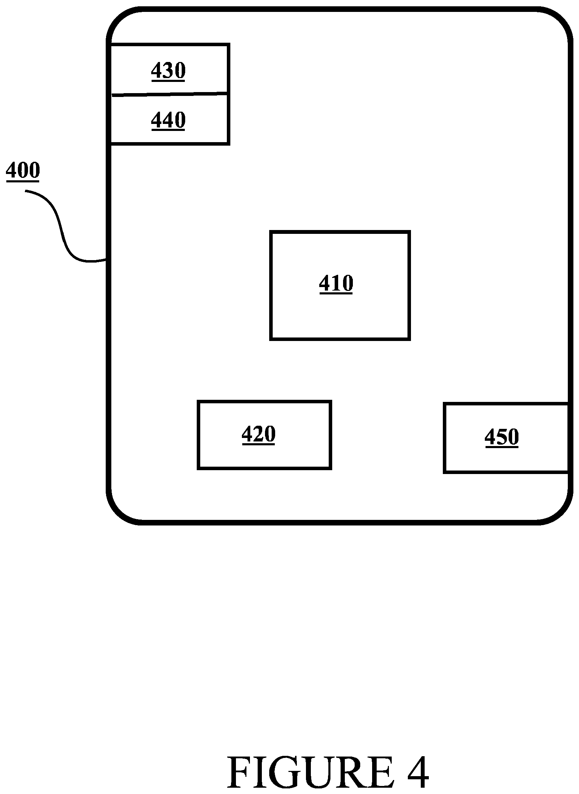

FIGURE 4 illustrates an example apparatus capable of supporting at least some example embodiments. Illustrated is device 400, which may comprise, for example, NF 120 or CA 130, or a device controlling functioning thereof. Comprised in device 400 is processor 410, which may comprise, for example, a single- or multi-core processor wherein a single-core processor comprises one processing core and a multi-core processor comprises more than one processing core. Processor 410 may comprise, in general, a control device. Processor 410 may comprise more than one processor. Processor 410 may be a control device. Processor 410 may comprise at least one Application-Specific Integrated Circuit, ASIC. Processor 410 may comprise at least one Field-Programmable Gate Array, FPGA. Processor 410 may comprise an Intel Xeon processor for example. Processor 410 may be means for performing method steps in device 400, such as determining, causing transmitting and causing receiving. Processor 410 may be configured, at least in part by computer instructions, to perform actions.

A processor may comprise circuitry, or be constituted as circuitry or circuitries, the circuitry or circuitries being configured to perform phases of methods in accordance with example embodiments described herein. As used in this application, the term "circuitry" may refer to one or more or all of the following: (a) hardware-only circuit implementations, such as implementations in only analog and/or digital circuitry, and (b) combinations of hardware circuits and software, such as, as applicable: (i) a combination of analog and/or digital hardware circuit(s) with software/firmware and (ii) any portions of hardware processor(s) with software (including digital signal processor(s)), software, and memory(ies) that work together to cause an apparatus, such as a network function, to perform various functions) and (c) hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

Device 400 may comprise memory 420. Memory 420 may comprise random-access memory and/or permanent memory. Memory 420 may comprise at least one RAM chip. Memory 420 may comprise solid-state, magnetic, optical and/or holographic memory, for example. Memory 420 may be at least in part accessible to processor 410. Memory 420 may be at least in part comprised in processor 410. Memory 420 may be means for storing information. Memory 420 may comprise computer instructions that processor 410 is configured to execute. When computer instructions configured to cause processor 410 to perform certain actions are stored in memory 420, and device 400 overall is configured to run under the direction of processor 410 using computer instructions from memory 420, processor 410 and/or its at least one processing core may be considered to be configured to perform said certain actions. Memory 420 may be at least in part comprised in processor 410. Memory 420 may be at least in part external to device 400 but accessible to device 400.

Device 400 may comprise a transmitter 430. Device 400 may comprise a receiver 440. Transmitter 430 and receiver 440 may be configured to transmit and receive, respectively, information in accordance with at least one cellular standard, such as a standard defined by the 3GPP. Transmitter 430 may comprise more than one transmitter. Receiver 440 may comprise more than one receiver. Transmitter 430 and/or receiver 440 may be configured to operate in accordance with a suitable communication standard.

Device 400 may comprise User Interface, UI, 450. UI 450 may comprise at least one of a display, a keyboard, a touchscreen, a vibrator arranged to signal to a user by causing device 400 to vibrate, a speaker and a microphone. A user may be able to operate device 400 via UI 450, for example to configure device 400 and/or functions it runs.

Processor 410 may be furnished with a transmitter arranged to output information from processor 410, via electrical leads internal to device 400, to other devices comprised in device 400. Such a transmitter may comprise a serial bus transmitter arranged to, for example, output information via at least one electrical lead to memory 420 for storage therein. Alternatively to a serial bus, the transmitter may comprise a parallel bus transmitter. Likewise processor 410 may comprise a receiver arranged to receive information in processor 410, via electrical leads internal to device 400, from other devices comprised in device 400. Such a receiver may comprise a serial bus receiver arranged to, for example, receive information via at least one electrical lead from receiver 440 for processing in processor 410. Alternatively to a serial bus, the receiver may comprise a parallel bus receiver.

Device 400 may comprise further devices not illustrated in FIGURE 4. In some example embodiments, device 400 may lack at least one device described above. For example, device 400 may not have UI 450.

Processor 410, memory 420, transmitter 430, receiver 440 and/or UI 450 may be interconnected by electrical leads internal to device 400 in a multitude of different ways. For example, each of the aforementioned devices may be separately connected to a master bus internal to device 400, to allow for the devices to exchange information. However, as the skilled person will appreciate, this is only one example and depending on the embodiment various ways of interconnecting at least two of the aforementioned devices may be selected without departing from the scope of the present invention.

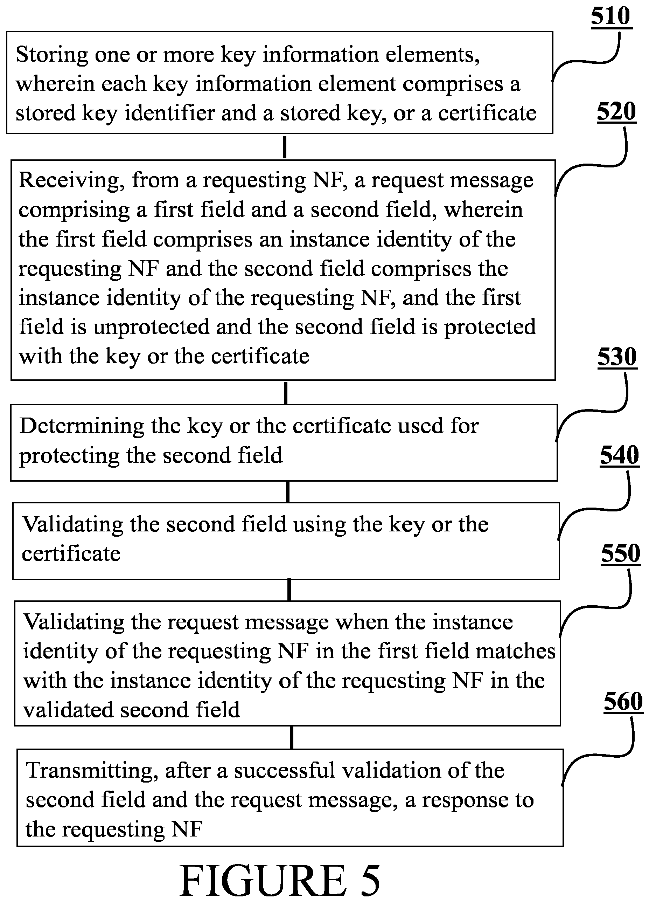

FIGURE 5 is a flow graph of a first method in accordance with at least some example embodiments. The phases of the illustrated first method may be performed by CA 130, or by a control device configured to control the functioning thereof, possibly when installed therein.

The first method may comprise, at step 510, storing, by an apparatus, one or more key information elements, wherein each key information element comprises a stored key identifier and a stored key or a certificate. The first method may further comprise, at step 520, receiving by the apparatus, from a requesting network function, a request message comprising a first field and a second field, wherein the first field comprises an instance identity of the requesting network function and the second field comprises the instance identity of the requesting network function, and the first field is unprotected and the second field is protected with the key or the certificate. The first method may further comprise, at step 530, determining by the apparatus the key or the certificate used for protecting the second field. The first method may further comprise, at step 540, validating by the apparatus the second field using the key or the certificate. The first method may further comprise, at step 550, validating by the apparatus the request message when the instance identity of the requesting network function in the first field matches with the instance identity of the requesting network function in the validated second field. Finally, the first method may comprise, at step 560, transmitting by the apparatus, after a successful validation of the second field and the request message, a response to the requesting network function.

It is to be understood that the embodiments disclosed are not limited to the particular structures, process steps, or materials disclosed herein, but are extended to equivalents thereof as would be recognized by those ordinarily skilled in the relevant arts. It should also be understood that terminology employed herein is used for the purpose of describing particular example embodiments only and is not intended to be limiting.

Reference throughout this specification to one example embodiment or an example embodiment means that a particular feature, structure, or characteristic described in connection with the example embodiment is included in at least one example embodiment. Thus, appearances of the phrases "in one example embodiment" or "in an example embodiment" in various places throughout this specification are not necessarily all referring to the same example embodiment. Where reference is made to a numerical value using a term such as, for example, about or substantially, the exact numerical value is also disclosed.

As used herein, a plurality of items, structural elements, compositional elements, and/or materials may be presented in a common list for convenience. However, these lists should be construed as though each member of the list is individually identified as a separate and unique member. Thus, no individual member of such list should be construed as a de facto equivalent of any other member of the same list solely based on their presentation in a common group without indications to the contrary. In addition, various example embodiments and examples may be referred to herein along with alternatives for the various components thereof. It is understood that such example embodiments, examples, and alternatives are not to be construed as de facto equivalents of one another, but are to be considered as separate and autonomous representations.

In an example embodiment, an apparatus, such as, for example, NF 120 or CA 130, or a device controlling functioning thereof, may comprise means for carrying out the example embodiments described above and any combination thereof.

In an example embodiment, a computer program may be configured to cause a method in accordance with the example embodiments described above and any combination thereof. In an example embodiment, a computer program product, embodied on a non-transitory computer readable medium, may be configured to control a processor to perform a process comprising the example embodiments described above and any combination thereof.

In an example embodiment, an apparatus, such as, for example, NF 120 or CA 130, or a device controlling functioning thereof, may comprise at least one processor, and at least one memory including computer program code, wherein the at least one memory and the computer program code are configured to, with the at least one processor, cause the apparatus at least to perform the example embodiments described above and any combination thereof.

Furthermore, the described features, structures, or characteristics may be combined in any suitable manner in one or more example embodiments. In the preceding description, numerous specific details are provided, such as examples of lengths, widths, shapes, etc., to provide a thorough understanding of example embodiments of the invention. One skilled in the relevant art will recognize, however, that the invention may be practiced without one or more of the specific details, or with other methods, components, materials, etc. In other instances, well-known structures, materials, or operations are not shown or described in detail to avoid obscuring aspects of the invention.

While the forgoing examples are illustrative of the principles of the example embodiments in one or more particular applications, it will be apparent to those of ordinary skill in the art that numerous modifications in form, usage and details of implementation may be made without the exercise of inventive faculty, and without departing from the principles and concepts of the invention. Accordingly, it is not intended that the invention be limited, except as by the claims set forth below.

The verbs "to comprise" and "to include" are used in this document as open limitations that neither exclude nor require the existence of also un-recited features. The features recited in depending claims are mutually freely combinable unless otherwise explicitly stated. Furthermore, it is to be understood that the use of "a" or "an", that is, a singular form, throughout this document does not exclude a plurality.

### INDUSTRIAL APPLICABILITY

At least some example embodiments find industrial application at least in 5G core networks, wherein it is desirable to enhance security, and possibly in other core networks in the future as well.

### ACRONYMS LIST

- 3GPP: 3rd Generation Partnership Project
- AF: Application Function
- AMF: Access and Mobility Function
- AUSF: Authentication Server Function
- CA: Certificate Authority
- CMP: Certificate Management Protocol
- CSR: Certificate Signing Request
- ID: Identity
- NEF: Network Exposure Function
- NF: Network Function
- NRF: Network Repository Function
- NSSF: Network Slice Selection Function
- NWDAF: Network Data Analysis Function
- OAM: Operations Administration and Maintenance
- PCF: Policy Control Function
- PLMN: Public Land Mobile Network
- RA: Registration Authority
- RefNum: Reference Number
- SAN: SubjectAltName
- SBA: Service-Based Architecture
- SCP: Service Communication Proxy
- SMF: Session Management Function
- UDM: Unified Data Management
- URI: Uniform Resource Identifier
- URN: Uniform Resource Name
- UUID: Universally Unique Identifier
- VNF: Virtualized Network Function

### REFERENCE SIGNS LIST

| | |
|---|---|
| 110 | Operator/OAM |
| 120 | Requesting NF |
| 130 | CA |
| 140 | NRF |
| 210 - 220 | Steps of the process of FIGURE 2 |
| 302 - 312 | Steps of the process of FIGURE 3 |
| 400 - 450 | Structure of the apparatus of FIGURE 4 |
| 510 - 560 | Phases of the first method in FIGURE |

## Claims

1. An apparatus (130, 400) comprising means (410, 420, 430, 440) for:
storing (510) one or more key information elements, wherein each key information element comprises a stored key identifier and a stored key, or a certificate;
receiving (520), from a requesting network function, a request message being an enrolment request message and comprising a first field and a second field, wherein the first field comprises an instance identity of the requesting network function and the second field comprises the instance identity of the requesting network function, the first field is a subject alt name field or a reference number field, the instance identity of the requesting network function is a fully qualified domain name, instance identity or any other parameter of a network function profile identifying the network function, and the first field is unprotected and the second field is protected with the key or the certificate;
determining (530) the key or the certificate used for protecting the second field;
validating (540) the second field using the key or the certificate;
validating (550) the request message when the instance identity of the requesting network function in the first field matches with the instance identity of the requesting network function in the validated second field; and
transmitting (560), after a successful validation of the second field and the request message, a response to the requesting network function, said response being an enrolment response.

2. The apparatus according to claim 1, wherein the second field comprises a protected message, said protected message further comprising a subject alt name field and a reference number field identifying the key or the certificate used for protecting the second field.

3. The apparatus according to claim 1, wherein the second field comprises the certificate, the certificate being an initial certificate issued by the apparatus for the instance identity of the requesting network function.

4. The apparatus according to any of the preceding claims, wherein the request message further comprises a third field comprising an expected hash value, and the means for validating the second field further comprises means for:
obtaining a decrypted second field by decrypting the second field with the key;
calculating a hash value based on the decrypted second field; and
determining that the second field is valid based on determining that the hash value equals the expected hash value.

5. The apparatus according to any of claims 1 to 4, wherein the request message further comprises a third field comprising an expected message authentication code, and the means for validating the second field further comprises means for:
calculating a message authentication code based on at least the second field and the key; and
determining that the second field is valid based on determining that the message authentication code equals the expected message authentication code.

6. The apparatus according to any of the preceding claims, wherein the request message further comprises a third field comprising an expected message authentication code, and the means for validating the second field further comprises means for:
calculating a message authentication code based on at least the second field and the key; and
determining that the second field is valid based on determining that the message authentication code equals the expected message authentication code.

7. The apparatus according to any of the preceding claims, wherein the enrolment request message is a certificate request message, and the enrolment response is a certificate response.

8. A method, comprising:
storing (510), by an apparatus, one or more key information elements, wherein each key information element comprises a stored key identifier and a stored key, or a certificate;
receiving (520) by the apparatus, from a requesting network function, a request message being an enrolment request message and comprising a first field and a second field, wherein the first field comprises an instance identity of the requesting network function and the second field comprises the instance identity of the requesting network function, the first field is a subject alt name field or a reference number field, the instance identity of the requesting network function is a fully qualified domain name, instance identity or any other parameter of a network function profile identifying the network function, and the first field is unprotected and the second field is protected with the key or the certificate;
determining (530) by the apparatus the key or the certificate used for protecting the second field;
validating (540) by the apparatus the second field using the key or the certificate;
validating (550) by the apparatus the request message when the instance identity of the requesting network function in the first field matches with the instance identity of the requesting network function in the validated second field; and
transmitting (560) by the apparatus, after a successful validation of the second field and the request message, a response to the requesting network function, said response being an enrolment response.

9. An apparatus (120, 400) comprising means (410, 420, 430, 440) for:
transmitting a request message to a certificate authority or registration authority, said request message being an enrolment request message and comprising a first field and a second field, wherein the first field comprises an instance identity of the requesting network function and the second field comprises the instance identity of the requesting network function, the first field is a subject alt name field or a reference number field, the instance identity of the requesting network function is a fully qualified domain name, instance identity or any other parameter of a network function profile identifying the network function, and the first field is unprotected and the second field is protected with a key or a certificate; and
in response to transmitting the request message, receiving a response from the certificate authority or registration authority after successful validation including that the second field is validated using the key or the certificate, said response being an enrolment response.

10. The apparatus according to claim 9, wherein the means for transmitting the request message further comprises means for:
calculating an expected hash value based on the second field; and
including the expected hash value as a third field in the request message before transmitting the request message.

11. The apparatus according to claim 10, wherein the means for transmitting the request message further comprises means for:
obtaining an encrypted second field based on the second field and the key; and
replacing the second field with the encrypted second field in the request message before transmitting the request message.

12. The apparatus according to claim 11, wherein the means for transmitting the request message further comprises means for:
calculating an expected message authentication code based on the second field and the key; and
including the expected message authentication code as a third field in the request message before transmitting the request message.

13. The apparatus according to any one of claims 9 to 12, wherein the enrolment request message is a certificate request message, and the enrolment response is a certificate response.

14. A method, comprising:
transmitting, by an apparatus, a request message to a certificate authority or registration authority, said request message being an enrolment request message and comprising a first field and a second field, wherein the first field comprises an instance identity of the requesting network function and the second field comprises the instance identity of the requesting network function, the first field is a subject alt name field or a reference number field, the instance identity of the requesting network function is a fully qualified domain name, instance identity or any other parameter of a network function profile identifying the network function, and the first field is unprotected and the second field is protected with a key or a certificate; and
receiving by the apparatus, in response to transmitting the request message, a response from the certificate authority or registration authority after successful validation including that the second field is validated using the key or the certificate, said response being an enrolment response.

15. A computer program comprising instructions which, when the program is executed by an apparatus, cause the apparatus to carry out a method according to claim 8 or claim 14.

## Patentansprüche

1. Vorrichtung (130, 400), umfassend Mittel (410, 420, 430, 440) zum:
Speichern (510) eines oder mehrerer Schlüsselinformationselemente, wobei jedes Schlüsselinformationselement eine gespeicherte Schlüsselkennung und einen gespeicherten Schlüssel oder ein Zertifikat umfasst;
Empfangen (520), von einer anfordernden Netzwerkfunktion, einer Anforderungsnachricht, die eine Einschreibungsanforderungsnachricht ist und ein erstes Feld und ein zweites Feld umfasst, wobei das erste Feld eine Instanzidentität der anfordernden Netzwerkfunktion umfasst und das zweite Feld die Instanzidentität der anfordernden Netzwerkfunktion umfasst, das erste Feld ein Feld für einen alternativen Subjektnamen oder ein Referenznummernfeld ist, die Instanzidentität der anfordernden Netzwerkfunktion ein vollständig qualifizierter Domänenname, eine Instanzidentität oder ein beliebiger anderer Parameter eines Netzwerkfunktionsprofils ist, das die Netzwerkfunktion identifiziert, und das erste Feld ungeschützt ist und das zweite Feld mit dem Schlüssel oder dem Zertifikat geschützt ist;
Bestimmen (530) des Schlüssels oder des Zertifikats, der bzw. das zum Schützen des zweiten Feldes verwendet wird;
Validieren (540) des zweiten Feldes unter Verwendung des Schlüssels oder des Zertifikats;
Validieren (550) der Anforderungsnachricht, wenn die Instanzidentität der anfordernden Netzwerkfunktion im ersten Feld mit der Instanzidentität der anfordernden Netzwerkfunktion im validierten zweiten Feld übereinstimmt; und
Übertragen (560), nach einer erfolgreichen Validierung des zweiten Feldes und der Anforderungsnachricht, einer Antwort an die anfordernde Netzwerkfunktion, wobei die Antwort eine Einschreibungsantwort ist.

2. Vorrichtung nach Anspruch 1, wobei das zweite Feld eine geschützte Nachricht umfasst, wobei die geschützte Nachricht ferner ein Feld für einen alternativen Subjektnamen und ein Referenznummernfeld umfasst, das den Schlüssel oder das Zertifikat identifiziert, der bzw. das zum Schützen des zweiten Feldes verwendet wird.

3. Vorrichtung nach Anspruch 1, wobei das zweite Feld das Zertifikat umfasst, wobei das Zertifikat ein anfängliches Zertifikat ist, das von der Vorrichtung für die Instanzidentität der anfordernden Netzwerkfunktion ausgestellt wird.

4. Vorrichtung nach einem der vorhergehenden Ansprüche, wobei die Anforderungsnachricht ferner ein drittes Feld umfasst, das einen erwarteten Hashwert umfasst, und die Mittel zum Validieren des zweiten Feldes ferner Mittel umfassen zum:
Erhalten eines entschlüsselten zweiten Feldes durch Entschlüsseln des zweiten Feldes mit dem Schlüssel;
Berechnen eines Hashwerts basierend auf dem entschlüsselten zweiten Feld; und
Bestimmen, dass das zweite Feld gültig ist, basierend auf dem Bestimmen, dass der Hashwert gleich dem erwarteten Hashwert ist.

5. Vorrichtung nach einem der Ansprüche 1 bis 4, wobei die Anforderungsnachricht ferner ein drittes Feld umfasst, das einen erwarteten Nachrichtenauthentifizierungscode umfasst, und die Mittel zum Validieren des zweiten Feldes ferner Mittel umfassen zum:
Berechnen eines Nachrichtenauthentifizierungscodes basierend auf mindestens dem zweiten Feld und dem Schlüssel; und
Bestimmen, dass das zweite Feld gültig ist, basierend auf dem Bestimmen, dass der Nachrichtenauthentifizierungscode gleich dem erwarteten Nachrichtenauthentifizierungscode ist.

6. Vorrichtung nach einem der vorhergehenden Ansprüche, wobei die Anforderungsnachricht ferner ein drittes Feld umfasst, das einen erwarteten Nachrichtenauthentifizierungscode umfasst, und die Mittel zum Validieren des zweiten Feldes ferner Mittel umfassen zum:
Berechnen eines Nachrichtenauthentifizierungscodes basierend auf mindestens dem zweiten Feld und dem Schlüssel; und
Bestimmen, dass das zweite Feld gültig ist, basierend auf dem Bestimmen, dass der Nachrichtenauthentifizierungscode gleich dem erwarteten Nachrichtenauthentifizierungscode ist.

7. Vorrichtung nach einem der vorhergehenden Ansprüche, wobei die Einschreibungsanforderungsnachricht eine Zertifikatsanforderungsnachricht ist und die Einschreibungsantwort eine Zertifikatsantwort ist.

8. Verfahren, umfassend:
Speichern (510), durch eine Vorrichtung, eines oder mehrerer Schlüsselinformationselemente, wobei jedes Schlüsselinformationselement eine gespeicherte Schlüsselkennung und einen gespeicherten Schlüssel oder ein Zertifikat umfasst;
Empfangen (520), durch die Vorrichtung, von einer anfordernden Netzwerkfunktion, einer Anforderungsnachricht, die eine Einschreibungsanforderungsnachricht ist und ein erstes Feld und ein zweites Feld umfasst, wobei das erste Feld eine Instanzidentität der anfordernden Netzwerkfunktion umfasst und das zweite Feld die Instanzidentität der anfordernden Netzwerkfunktion umfasst, das erste Feld ein Feld für einen alternativen Subjektnamen oder ein Referenznummernfeld ist, die Instanzidentität der anfordernden Netzwerkfunktion ein vollständig qualifizierter Domänenname, eine Instanzidentität oder ein beliebiger anderer Parameter eines Netzwerkfunktionsprofils ist, das die Netzwerkfunktion identifiziert, und das erste Feld ungeschützt ist und das zweite Feld mit dem Schlüssel oder dem Zertifikat geschützt ist;
Bestimmen (530), durch die Vorrichtung, des Schlüssels oder des Zertifikats, der bzw. das zum Schützen des zweiten Feldes verwendet wird;
Validieren (540), durch die Vorrichtung, des zweiten Feldes unter Verwendung des Schlüssels oder des Zertifikats;
Validieren (550), durch die Vorrichtung, der Anforderungsnachricht, wenn die Instanzidentität der anfordernden Netzwerkfunktion im ersten Feld mit der Instanzidentität der anfordernden Netzwerkfunktion im validierten zweiten Feld übereinstimmt; und
Übertragen (560), durch die Vorrichtung, nach einer erfolgreichen Validierung des zweiten Feldes und der Anforderungsnachricht, einer Antwort an die anfordernde Netzwerkfunktion, wobei die Antwort eine Einschreibungsantwort ist.

9. Vorrichtung (120, 400), umfassend Mittel (410, 420, 430, 440) zum:
Übertragen einer Anforderungsnachricht an eine Zertifizierungsstelle oder Registrierungsstelle, wobei die Anforderungsnachricht eine Einschreibungsanforderungsnachricht ist und ein erstes Feld und ein zweites Feld umfasst, wobei das erste Feld eine Instanzidentität der anfordernden Netzwerkfunktion umfasst und das zweite Feld die Instanzidentität der anfordernden Netzwerkfunktion umfasst, das erste Feld ein Feld für einen alternativen Subjektnamen oder ein Referenznummernfeld ist, die Instanzidentität der anfordernden Netzwerkfunktion ein vollständig qualifizierter Domänenname, eine Instanzidentität oder ein beliebiger anderer Parameter eines Netzwerkfunktionsprofils ist, das die Netzwerkfunktion identifiziert, und das erste Feld ungeschützt ist und das zweite Feld mit einem Schlüssel oder einem Zertifikat geschützt ist; und
als Reaktion auf das Übertragen der Anforderungsnachricht, Empfangen einer Antwort von der Zertifizierungsstelle oder Registrierungsstelle nach einer erfolgreichen Validierung, die einschließt, dass das zweite Feld unter Verwendung des Schlüssels oder des Zertifikats validiert wird, wobei die Antwort eine Einschreibungsantwort ist.

10. Vorrichtung nach Anspruch 9, wobei die Mittel zum Übertragen der Anforderungsnachricht ferner Mittel umfassen zum:
Berechnen eines erwarteten Hashwerts basierend auf dem zweiten Feld; und
Aufnehmen des erwarteten Hashwerts als drittes Feld in die Anforderungsnachricht vor dem Übertragen der Anforderungsnachricht.

11. Vorrichtung nach Anspruch 10, wobei die Mittel zum Übertragen der Anforderungsnachricht ferner Mittel umfassen zum:
Erhalten eines verschlüsselten zweiten Feldes basierend auf dem zweiten Feld und dem Schlüssel; und
Ersetzen des zweiten Feldes durch das verschlüsselte zweite Feld in der Anforderungsnachricht vor dem Übertragen der Anforderungsnachricht.

12. Vorrichtung nach Anspruch 11, wobei die Mittel zum Übertragen der Anforderungsnachricht ferner Mittel umfassen zum:
Berechnen eines erwarteten Nachrichtenauthentifizierungscodes basierend auf dem zweiten Feld und dem Schlüssel; und
Aufnehmen des erwarteten Nachrichtenauthentifizierungscodes als drittes Feld in die Anforderungsnachricht vor dem Übertragen der Anforderungsnachricht.

13. Vorrichtung nach einem der Ansprüche 9 bis 12, wobei die Einschreibungsanforderungsnachricht eine Zertifikatsanforderungsnachricht ist und die Einschreibungsantwort eine Zertifikatsantwort ist.

14. Verfahren, umfassend:
Übertragen, durch eine Vorrichtung, einer Anforderungsnachricht an eine Zertifizierungsstelle oder Registrierungsstelle, wobei die Anforderungsnachricht eine Einschreibungsanforderungsnachricht ist und ein erstes Feld und ein zweites Feld umfasst, wobei das erste Feld eine Instanzidentität der anfordernden Netzwerkfunktion umfasst und das zweite Feld die Instanzidentität der anfordernden Netzwerkfunktion umfasst, das erste Feld ein Feld für einen alternativen Subjektnamen oder ein Referenznummernfeld ist, die Instanzidentität der anfordernden Netzwerkfunktion ein vollständig qualifizierter Domänenname, eine Instanzidentität oder ein beliebiger anderer Parameter eines Netzwerkfunktionsprofils ist, das die Netzwerkfunktion identifiziert, und das erste Feld ungeschützt ist und das zweite Feld mit einem Schlüssel oder einem Zertifikat geschützt ist; und
Empfangen, durch die Vorrichtung, als Reaktion auf das Übertragen der Anforderungsnachricht, einer Antwort von der Zertifizierungsstelle oder Registrierungsstelle nach einer erfolgreichen Validierung, die einschließt, dass das zweite Feld unter Verwendung des Schlüssels oder des Zertifikats validiert wird, wobei die Antwort eine Einschreibungsantwort ist.

15. Computerprogramm, umfassend Anweisungen, die bei Ausführung des Programms durch eine Vorrichtung die Vorrichtung veranlassen, ein Verfahren nach Anspruch 8 oder Anspruch 14 auszuführen.

## Revendications

1. Appareil (130, 400) comprenant des moyens (410, 420, 430, 440) pour :
stocker (510) un ou plusieurs éléments d'information de clé, chaque élément d'information de clé comprenant un identifiant de clé stocké et une clé stockée, ou un certificat ;
recevoir (520), à partir d'une fonction réseau demandeuse, un message de demande étant un message de demande d'enrôlement et comprenant un premier champ et un deuxième champ, le premier champ comprenant une identité d'instance de la fonction réseau demandeuse et le deuxième champ comprenant l'identité d'instance de la fonction réseau demandeuse, le premier champ étant un champ de nom alternatif de sujet ou un champ de numéro de référence, l'identité d'instance de la fonction réseau demandeuse étant un nom de domaine pleinement qualifié, une identité d'instance ou tout autre paramètre d'un profil de fonction réseau identifiant la fonction réseau, et le premier champ étant non protégé et le deuxième champ étant protégé avec la clé ou le certificat ;
déterminer (530) la clé ou le certificat utilisé pour protéger le deuxième champ ;
valider (540) le deuxième champ à l'aide de la clé ou du certificat ;
valider (550) le message de demande lorsque l'identité d'instance de la fonction réseau demandeuse dans le premier champ correspond à l'identité d'instance de la fonction réseau demandeuse dans le deuxième champ validé ; et
transmettre (560), après une validation réussie du deuxième champ et du message de demande, une réponse à la fonction réseau demandeuse, ladite réponse étant une réponse d'enrôlement.

2. Appareil selon la revendication 1, dans lequel le deuxième champ comprend un message protégé, ledit message protégé comprenant en outre un champ de nom alternatif de sujet et un champ de numéro de référence identifiant la clé ou le certificat utilisé pour protéger le deuxième champ.

3. Appareil selon la revendication 1, dans lequel le deuxième champ comprend le certificat, le certificat étant un certificat initial délivré par l'appareil pour l'identité d'instance de la fonction réseau demandeuse.

4. Appareil selon l'une quelconque des revendications précédentes, dans lequel le message de demande comprend en outre un troisième champ comprenant une valeur de hachage attendue, et les moyens pour valider le deuxième champ comprennent en outre des moyens pour :
obtenir un deuxième champ déchiffré en déchiffrant le deuxième champ avec la clé ;
calculer une valeur de hachage sur la base du deuxième champ déchiffré ; et
déterminer que le deuxième champ est valide sur la base de la détermination que la valeur de hachage est égale à la valeur de hachage attendue.

5. Appareil selon l'une quelconque des revendications 1 à 4, dans lequel le message de demande comprend en outre un troisième champ comprenant un code d'authentification de message attendu, et les moyens pour valider le deuxième champ comprennent en outre des moyens pour :
calculer un code d'authentification de message sur la base d'au moins le deuxième champ et la clé ; et
déterminer que le deuxième champ est valide sur la base de la détermination que le code d'authentification de message est égal au code d'authentification de message attendu.

6. Appareil selon l'une quelconque des revendications précédentes, dans lequel le message de demande comprend en outre un troisième champ comprenant un code d'authentification de message attendu, et les moyens pour valider le deuxième champ comprennent en outre des moyens pour :
calculer un code d'authentification de message sur la base d'au moins le deuxième champ et la clé ; et
déterminer que le deuxième champ est valide sur la base de la détermination que le code d'authentification de message est égal au code d'authentification de message attendu.

7. Appareil selon l'une quelconque des revendications précédentes, dans lequel le message de demande d'enrôlement est un message de demande de certificat, et la réponse d'enrôlement est une réponse de certificat.

8. Procédé, comprenant :
le stockage (510), par un appareil, d'un ou plusieurs éléments d'information de clé, chaque élément d'information de clé comprenant un identifiant de clé stocké et une clé stockée, ou un certificat ;
la réception (520), par l'appareil, à partir d'une fonction réseau demandeuse, d'un message de demande étant un message de demande d'enrôlement et comprenant un premier champ et un deuxième champ, le premier champ comprenant une identité d'instance de la fonction réseau demandeuse et le deuxième champ comprenant l'identité d'instance de la fonction réseau demandeuse, le premier champ étant un champ de nom alternatif de sujet ou un champ de numéro de référence, l'identité d'instance de la fonction réseau demandeuse étant un nom de domaine pleinement qualifié, une identité d'instance ou tout autre paramètre d'un profil de fonction réseau identifiant la fonction réseau, et le premier champ étant non protégé et le deuxième champ étant protégé avec la clé ou le certificat ;
la détermination (530), par l'appareil, de la clé ou du certificat utilisé pour protéger le deuxième champ ;
la validation (540), par l'appareil, du deuxième champ à l'aide de la clé ou du certificat ;
la validation (550), par l'appareil, du message de demande lorsque l'identité d'instance de la fonction réseau demandeuse dans le premier champ correspond à l'identité d'instance de la fonction réseau demandeuse dans le deuxième champ validé ; et
la transmission (560), par l'appareil, après une validation réussie du deuxième champ et du message de demande, d'une réponse à la fonction réseau demandeuse, ladite réponse étant une réponse d'enrôlement.

9. Appareil (120, 400) comprenant des moyens (410, 420, 430, 440) pour :
transmettre un message de demande à une autorité de certification ou à une autorité d'enregistrement, ledit message de demande étant un message de demande d'enrôlement et comprenant un premier champ et un deuxième champ, le premier champ comprenant une identité d'instance de la fonction réseau demandeuse et le deuxième champ comprenant l'identité d'instance de la fonction réseau demandeuse, le premier champ étant un champ de nom alternatif de sujet ou un champ de numéro de référence, l'identité d'instance de la fonction réseau demandeuse étant un nom de domaine pleinement qualifié, une identité d'instance ou tout autre paramètre d'un profil de fonction réseau identifiant la fonction réseau, et le premier champ étant non protégé et le deuxième champ étant protégé avec une clé ou un certificat ; et
en réponse à la transmission du message de demande, recevoir une réponse de l'autorité de certification ou de l'autorité d'enregistrement après une validation réussie incluant le fait que le deuxième champ est validé à l'aide de la clé ou du certificat, ladite réponse étant une réponse d'enrôlement.

10. Appareil selon la revendication 9, dans lequel les moyens pour transmettre le message de demande comprennent en outre des moyens pour :
calculer une valeur de hachage attendue sur la base du deuxième champ ; et
inclure la valeur de hachage attendue en tant que troisième champ dans le message de demande avant de transmettre le message de demande.

11. Appareil selon la revendication 10, dans lequel les moyens pour transmettre le message de demande comprennent en outre des moyens pour :
obtenir un deuxième champ chiffré sur la base du deuxième champ et de la clé ; et
remplacer le deuxième champ par le deuxième champ chiffré dans le message de demande avant de transmettre le message de demande.

12. Appareil selon la revendication 11, dans lequel les moyens pour transmettre le message de demande comprennent en outre des moyens pour :
calculer un code d'authentification de message attendu sur la base du deuxième champ et de la clé ; et
inclure le code d'authentification de message attendu en tant que troisième champ dans le message de demande avant de transmettre le message de demande.

13. Appareil selon l'une quelconque des revendications 9 à 12, dans lequel le message de demande d'enrôlement est un message de demande de certificat, et la réponse d'enrôlement est une réponse de certificat.

14. Procédé, comprenant :
la transmission, par un appareil, d'un message de demande à une autorité de certification ou à une autorité d'enregistrement, ledit message de demande étant un message de demande d'enrôlement et comprenant un premier champ et un deuxième champ, le premier champ comprenant une identité d'instance de la fonction réseau demandeuse et le deuxième champ comprenant l'identité d'instance de la fonction réseau demandeuse, le premier champ étant un champ de nom alternatif de sujet ou un champ de numéro de référence, l'identité d'instance de la fonction réseau demandeuse étant un nom de domaine pleinement qualifié, une identité d'instance ou tout autre paramètre d'un profil de fonction réseau identifiant la fonction réseau, et le premier champ étant non protégé et le deuxième champ étant protégé avec une clé ou un certificat ; et
la réception, par l'appareil, en réponse à la transmission du message de demande, d'une réponse de l'autorité de certification ou de l'autorité d'enregistrement après une validation réussie incluant le fait que le deuxième champ est validé à l'aide de la clé ou du certificat, ladite réponse étant une réponse d'enrôlement.

15. Programme d'ordinateur comprenant des instructions qui, lorsque le programme est exécuté par un appareil, amènent l'appareil à exécuter un procédé selon la revendication 8 ou la revendication 14.
